(19) Europäisches Patentamt
European Patent Office
Office européen des brevets

(11) Numéro de publication: **0 378 938 A1**

# (12) DEMANDE DE BREVET EUROPEEN

(21) Numéro de dépôt: **89403498.2**

(22) Date de dépôt: **15.12.89**

(51) Int. Cl.[5]: **C08G 77/62, C08J 3/24, C04B 35/00, C04B 35/58**

(30) Priorité: **23.12.88 FR 8817067**

(43) Date de publication de la demande: **25.07.90 Bulletin 90/30**

(84) Etats contractants désignés: **AT BE CH DE ES FR GB GR IT LI LU NL SE**

(71) Demandeur: **RHONE POULENC CHIMIE**
**25 Quai Paul Doumer**
**F-92408 Courbevoie Cédex(FR)**

(72) Inventeur: **Lebrun, Jean-Jacques**
**Cent.Hosp.de Lyon Sud Chemin du Grand Revoyet**
**F-69310 Pierre Benite(FR)**
Inventeur: **Bobichon, Charles**
**1, rue de l'Angile**
**F-69005 Lyon(FR)**
Inventeur: **Caix, Olivier**
**21Ter avenue du Point du Jour**
**F-69005 Lyon(FR)**

(74) Mandataire: **Esson, Jean-Pierre et al**
**RHONE-POULENC CHIMIE Service Brevets Chimie 25, quai Paul Doumer**
**F-92408 Courbevoie Cedex(FR)**

## (54) Compositions polysilazanes réticulables sous l'action d'un composé aminé et procédé de réticulation.

(57) L'invention a trait à de nouvelles compositions polysilazanes réticulables, qui sont caractérisées par le fait qu'elles comportent une quantité efficace d'au moins un composé silicié, substantiellement inerte vis à vis desdits polysilazanes, et susceptible d'être transaminé par un composé aminé comprenant au moins un groupement $>NH$.

Les compositions selon l'invention sont alors réticulées par mise en contact avec ledit composé aminé.

Les compositions ainsi réticulées peuvent servir à la préparation de produits céramiques à base de SiC et/ou $Si_3N_4$.

EP 0 378 938 A1

# COMPOSITIONS POLYSILAZANES RETICULABLES SOUS L'ACTION D'UN COMPOSE AMINE ET PROCEDE DE RETICULATION

La présente invention a trait à de nouvelles compositions polysilazanes réticulables sous l'action d'un composé aminé.

Elle concerne également un procédé de réticulation de telles compositions.

Elle concerne enfin, à titre d'application, l'utilisation desdites compositions réticulées pour la préparation de matériaux céramiques à base de carbure et/ou nitrure de silicium.

L'idée de préparer des produits céramiques, chargés ou non, à base de carbure et/ou nitrure de silicium par décomposition thermique de composés précurseurs du type polysilazane, notamment organopolysilazane ou organopoly(disilyl) silazane n'est pas nouvelle et, à ce jour, de nombreux articles et brevets ont été publiés sur le sujet.

Les organopolysilazanes et les organopoly(disilyl)silazanes dénommés par la suite polysilazanes sont des produits bien connus se présentant sous forme de monomères, d'oligomères et de polymères cycliques ou linéaires et également sous la forme de polymères résineux. Ces polysilazanes peuvent être préparés suivant une large variété de procédés à partir d'une gamme étendue de produits de départ.

L'intérêt d'une telle voie polymère réside surtout dans les possibilités de mise en forme de ce type de produits, et plus particulièrement pour l'obtention, après pyrolyse, d'articles céramiques en $Si_3N_4$, SiC, SiNC, ou leurs mélanges, sous forme de fibres ou de revêtements plus ou moins minces.

En fait, la mise en oeuvre des polysilazanes sous la forme de fibres constitue probablement un de leurs avantages principaux.

Selon un schéma désormais classique, des polysilazanes (après ramollissement éventuel s'ils sont initialement à l'état solide) sont filés en fibres continues par tout moyen connu en soi, notamment par extrusion à travers des filières, ces fibres sont ensuite traitées dans le but notamment d'améliorer leur tenue thermique et/ou mécanique, puis pyrolysées pour donner finalement les fibres en céramique désirées.

Le traitement de la fibre préalablement à sa pyrolyse, appelé souvent indifféremment traitement de durcissement, d'infusibilité ou bien encore de réticulation, constitue une étape essentielle de tout procédé visant à la préparation de fibres céramiques par une voie polymères silazanes.

A ce jour, le durcissement des fibres polysilazanes fait appel soit à des méthodes physiques (irradiations) soit à des méthodes thermochimiques.

Les méthodes physiques présentent l'inconvénient majeur d'être de mise en oeuvre délicate et onéreuse, et la seule voie retenue actuellement industriellement est le durcissement thermochimique au moyen d'un traitement sous un mélange air/vapeurs d'eau.

Cependant, un tel traitement a pour inconvénient sérieux d'introduire des quantités importantes d'oxygène dans la fibre céramique, ce qui peut se traduire par une altération sensible des performances d'ensemble de ladite fibre, notamment de certaines de ses propriétés thermomécaniques comme par exemple sa résistance à la rupture.

La présente invention a donc pour but de résoudre le problème ci-dessus et de proposer un moyen de traitement chimique simple, efficace, économique et de mise en oeuvre aisée qui, en obviant aux inconvénients des procédés de l'art antérieur, permette d'aboutir sous des formes les plus diverses (fils, fibres, pellicules, revêtements, pièces massives, etc...) à des polysilazanes substantiellement infusibles qui, lors de leur pyrolyse, donnent avec de bons rendements pondéraux des produits céramiques à base de $Si_3N_4$ et/ou SiC présentant d'excellentes propriétés.

On a maintenant trouvé que ce but, et d'autres, peuvent être atteints au moyen de la présente invention qui concerne en effet notamment de nouvelles compositions polysilazanes réticulables, et qui sont caractérisées par le fait qu'elles comportent une quantité efficace d'au moins un composé silicié, substantiellement inerte vis à vis desdits polysilazanes, et susceptible d'être transaminé par un composé aminé comprenant au moins un groupement $>$NH.

Selon l'acceptation commune et générale, on devra entendre ici par transamination tout mécanisme chimique par lequel des groupements azotés fixés directement sur le ou les atomes de silicium dudit composé silicié sont remplacés par des groupements aminos dudit composé aminé.

Pour rendre les compositions selon l'invention réticulables, ledit composé silicié doit bien entendu présenter au moins deux groupements azotés transaminables, fixés ou non sur un même atome de silicium.

En vue de réticuler les compositions polysilazanes selon l'invention, il suffit alors de les mettre en contact avec ledit composé aminé réactif, et ceci selon des modalités pratiques définies plus en détails ci-après, jusqu'à l'obtention d'un état substantiellement infusible.

Globalement, et de manière simplifiée, l'idée générale à la base de la présente invention réside donc dans l'ajout, à un polysilazane de départ, d'un produit silicié présentant la propriété d'une part d'être inactif vis à vis du polysilazane (dans le but notamment de ne pas pertuber sa mise en forme ultérieure) mais d'autre part de pouvoir être "activé" par transamination (après la mise en forme du polysilazane) au moyen d'un composé aminé réactif, dans le but d'initier la réaction de réticulation.

Mais d'autres caractéristiques, aspects et avantages de l'invention apparaitront encore plus clairement à la lecture de la description qui va suivre, et des exemples concrets, mais non limitatifs, relatifs à sa mise en oeuvre.

Les organopolysilazanes de départ susceptibles d'être utilisés dans les compositions selon l'invention, et donc susceptibles d'être réticulés selon un procédé conforme à l'invention, sont des produits bien connus en soi et aisés à préparer ; on peut utiliser notamment n'importe quel produit de réaction entre : (a) au moins un organohalogénosilane de formule (I):

$R_aX_{4-a}Si$ (I)

dans laquelle X désigne un halogène et les radicaux R, identiques ou différents, sont choisis parmi l'hydrogène, un radical alkyle linéaire ou ramifié éventuellement halogéné, un radical cycloalkyle, un radical aryle tel que le radical phényle et naphtyle, un radical arylalkyle ou alkylaryle, un radical alcényle tel que le radical vinyle ou allyle, un radical alcynyle tel le radical éthynyle ou propynyle, et l'indice a étant égal à 0, 1, 2 ou 3, et (b) un composé organique ou organosilylé comportant au moins un groupement $NH_2$ ou NH comme par exemple l'ammoniac, les amines primaires ou secondaires, les silylamines, les amides, les hydrazines, les hydrazides, etc...

Dans la formule (I), comme exemples de radicaux R alkyle, on peut citer les radicaux méthyle, éthyle, propyle, butyle, pentyle, hexyle, heptyle et octyle ; R cycloalkyle : on peut citer les radicaux cyclopentyle, cyclohexyle et cycloheptyle ; R arylalkyle : les radicaux benzyle, phénylethyle ; R alkylaryle : les radicaux tolyle et xylyle.

A titre d'exemple, comme organohalogénosilane utilisable seul ou en mélange, on peut citer :

$CH_3HSiCl_2$, $H_2SiCl_2$, $(CH_3)_2HSiCl$, $HSiCl_3$

$(CH_3)_2SiCl_2$, $(CH_3)_3SiCl$, $CH_3SiCl_3$, $SiCl_4$

$(CH_3)_2Si(CH_2Cl)_2$, $(CH_3)_3SiCH_2Cl$, $CH_3Si(CH_2Cl)_3$

$(C_6H_5)_2SiCl_2$, $(C_6H_5)(CH_3)SiCl_2$, $C_6H_5SiCl_3$

$(CH_3)(CH_3CH_2)SiCl_2$, $(CH_3)(CH_2 = CH)SiCl_2$

$(CH_3)_2 (CH_2 = CH) SiCl$, $(C_6H_5)_2 (CH_2 = CH)SiCl$

$(C_6H_5)(CH_2 = CH) SiCl_2$, $CH_3(C_6H_5)(CH_2 = CH) SiCl$.

Comme exemple de composés comportant au moins un groupement $NH_2$ ou NH et utilisables pour la synthèse des organopolysilazanes ci-dessus, ou peut citer : l'ammoniac, la méthylamine, la diméthylamine, l'éthylamine, la cyclopropylamine, l'hydrazine, la méthylhydrazine, l'éthylènediamine, la tétraméthylènediamine, l'hexaméthylènediamine, l'aniline, la méthylaniline, la diphénylamine, la toluidine, la guanidine, l'aminoguanidine, l'urée, l'hexaméthyldisilazane, le diphényltétraméthyldisilazane, le tétraphényldiméthyldisilazane, le tétraméthyldivinyldisilazane, le diméthyldiphényldivinyldisilazane et le tétraméthyldisilazane.

Les organopolysilazanes obtenus en fin de réaction englobent plus spécifiquement :

1 - les polymères linéaires répondant aux formules :

$H_2N (R_2SiNH)_p SiR_2 NH_2$ (II)

et

$R_3SiNH(R_2SiNH)_{p'} SiR_3$ (III)

dans lesquelles R a la signification donnée pour la formule (I) ; p et p' sont des nombres entiers pouvant être compris entre 1 et 1000 généralement entre 3 et 300.

Les polymères de formule (II) peuvent être préparés par mise en contact de diorganodichlorosilanes avec de l'ammoniac, et ceux de formule (III) par réaction d'ammoniac sur un triorganochlorosilane ou un mélange de diorganodichlorosilane et de triorganochlorosilane (voir brevet français FR - A. 1.086.932, brevet américain US - A 2.564.674).

De façon générale, la réaction d'organohalogénosilane sur une organoamine est décrite dans les brevets américains US-A 3.853.567 et 3.892.583 et la réaction d'organohalogénosilane sur un disilazane est décrite dans le brevet belge BE-A 888.787.

2 - les polymères cycliques répondant à la formule :

$(R_2SiNH)_n$ (IV)

dans laquelle n est compris entre 3 et 10, généralement n = 3,4 et R a la signification donnée pour la formule (I) ci-dessus. Ils sont décrits notamment dans le brevet britannique GB-A.881.178.

3 - les polymères résineux formés de motifs choisis parmi ceux de formule $R_3SiNH_{0,5}$, $R_2 SiNH$, $RSiNH_{1,5}$, $Si(NH)_2$.

Ils sont avantageusement préparés par mise en contact des organochlorosilanes correspondant ou des mélanges de ces silanes, avec de l'ammoniac, de préférence en milieu solvant organique (voir brevets français FR-A 1.379.243, FR-A 1.392.853 et FR-A 1.393.728).

Les organopoly(disilyl)silazanes de départ susceptibles d'être utilisés dans les compositions selon l'invention, et donc susceptibles d'être réticulés selon un procédé conforme à l'invention, sont également des produits bien connus en soi et aisés à préparer. Ils peuvent être notamment préparés par action : (a) d'un composé organique ou organosilylé comportant au moins un groupement $NH_2$ ou NH comme par exemple l'ammoniac, les amines primaires ou secondaires, les silylamines, les amides, les hydrazines et les hydrazides, etc..., sur (b) au moins un organohalogénodisilane de formule :

$R_bX_{3-b}Si\ Si\ R_cX_{3-c}$ (V)

dans laquelle les radicaux R identiques ou différents ont la même signification que ci-dessus et b est égal à 0,1, 2 ou 3 et c est égal à 0, 1 ou 2, et X est un halogène, généralement le chlore.

Comme exemple de composés de formule (V) on peut citer :

$(CH_3)_2$ ClSiSi $(CH_3)_2$ Cl, $(CH_3)_2$Cl SiSi $CH_3$ $Cl_2$

$CH_3$ $Cl_2$ SiSi $CH_3$ $Cl_2$

Comme exemples de composés comportant au moins un groupement $NH_2$ et NH utilisables pour la synthèse des poly(disilyl)silazanes, on peut citer les mêmes composés que ceux cités ci-dessus pour l'aminolyse des organohalogénomonosilanes.

De manière générale, la réaction d'halogénodisilane, en présence éventuellement d'halogenosilane, sur l'ammoniac est décrite dans le brevet européen EP-A 75826. La réaction d'halogénodisilane sur un disilazane est décrite dans le brevet français FR-A 2.497.812.

Enfin, comme décrit dans le brevet EP-A 75826, il est possible de préparer des organopoly (disilyl) silazanes-silazanes par réaction de dérivés aminés cités précédemment sur des mélanges de produits halogénés de formule (I) et (V) ci-dessus.

Les polysilazanes de départ préparés à partir d'ammoniac sont généralement appelés ammonolysats et les polysilazanes de départ préparés à partir d'un composé aminé comme indiqué ci-dessus sont appelés aminolysats qui incluent donc les ammonolysats.

Bien entendu, il est également possible d'utiliser à titre de polysilazanes de départ des polysilazanes qui, issus des réactions d'aminolyse décrites ci-dessus, ont subi en outre des traitememnts catalytiques bien connus destinés à provoquer, suivant la nature de l'aminolysat, une polymérisation et/ou une copolymérisation et/ou un réarrangement des molécules, et ceci dans le but d'augmenter encore leur poids moléculaire, mais tout en gardant aux polysilazanes obtenus leur caractère fusible et soluble dans les solvants organiques.

Les conditions de mise en oeuvre de tels traitements catalytiques sont décrites notamment dans les documents suivants, tous cités à titre de références non limitatives : JP-A-77/160446, US-A-3.007.886, US-A-3.187.030 et FR-A-2.577.933.

Il est également possible d'utiliser à titre de polysilazanes de départ des copolymères silanes-silazanes obtenus par polycondensation, en milieu solvant et en présence d'un métal alcalin, notamment le sodium, entre des silanes chlorés et des disilazanes chlorés, comme décrit dans la demande de brevet français déposée sous le n° 87 08091, ou bien encore des polycarbosilazanes obtenus par thermolyse, de préférence opérée sous atmosphère inerte et à une température comprise entre 250° et 550° C, des copolymères ci-dessus.

De préférence, on opèrera avec des polysilazanes de départ présentant par molécule au moins un groupement ≡ Si-NH-.

Le choix des composés siliciés utilisés dans les compositions polysilazanes réticulables selon l'invention est, comme déjà indiqué précédement, gouverné par les deux exigences suivantes :

a) le composé silicié doit être tout d'abord substantiellement inerte vis-à-vis du polysilazane de départ, c'est à dire que sa mise en contact avec le polysilazane ne doit engendrer chez ce dernier aucune transformation physico-chimique notable, notamment au niveau de son point de fusion ou de ramollissement ; le caractère stable de la composition permet ainsi de ne pas perturber la mise en forme ultérieure du polysilazane (notamment lors d'une extrusion).

b) il faut ensuite qu'il soit susceptible d'être transaminé par un composé aminé comportant au moins un groupement ⪾NH.

Pour des raisons liées à la clarté de l'exposé et afin de mieux faire comprendre cette seconde exigence, un exemple formel et non limitatif destiné à illustrer, dans son principe même, le procédé de réticulation à la base de la présente invention, va maintenant être donné. Dans les équations données ci-dessous :

- ≡ Si① -NR-Si② ≡ symbolise le polysilazane de départ, constituant de base de la composition selon

l'invention,

- ≡ Si③ -Y symbolise le composé silicié entrant dans la composition selon l'invention et destiné à être transaminé (Y symbolise un radical azoté partant),

- 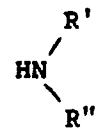

symbolise le composé aminé destiné à être mis en contact avec la composition selon l'invention pour assurer sa réticulation.

Les mécanismes réactionnels mis en jeu lors de la mise en contact composition/composé aminé sont alors les suivants :

**transamination** (étape 1)

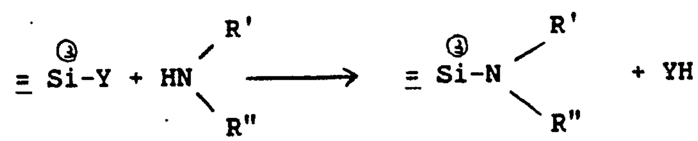

**réticulation** (étape 2)

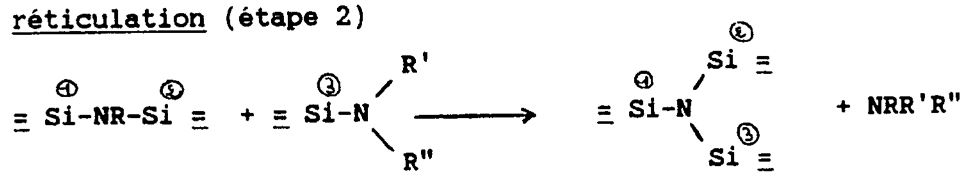

Bien entendu, on aura compris que plus le composé silicié de départ comprendra de groupements Y susceptibles d'être transaminés, et plus la composition polysilazane obtenue en fin de réaction sera réticulée, étant par ailleurs entendu, comme déjà indiqué, que ledit composé silicié doit contenir à l'origine au moins deux groupements transaminables.

Ainsi, par exemple :

- si le composé silicié de départ est du type

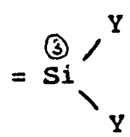

alors la composition réticulée sera constituée de motifs

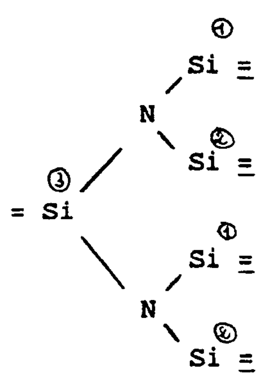

- si le composé silicié de départ est du type

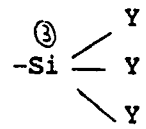

alors la composition réticulée sera constituée de motifs

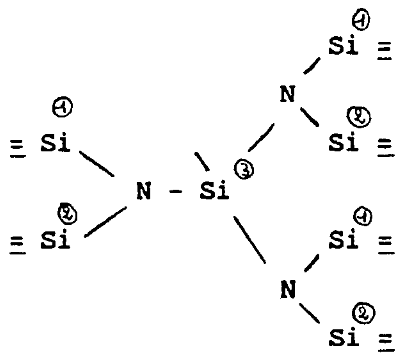

- enfin, si le composé silicié de départ est du type

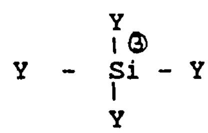

alors la composition réticulée sera constituée de motifs

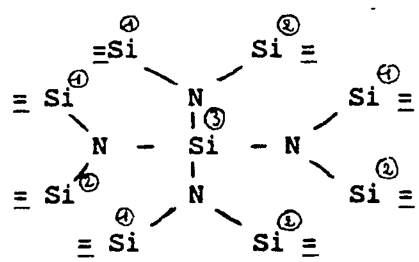

Selon un mode préférentiel de réalisation de l'invention, les composés siliciés répondent à la formule (A) suivante :

$R_x Si Y_{4-x}$ (A)

formule dans laquelle les radicaux R sont choisis, identiques ou différents, parmi l'atome d'hydrogène, les radicaux hydrocarbonés, éventuellement substitués, et les radicaux silylés ; les radicaux Y représentent des radicaux identiques ou différents, susceptibles d'être transaminés ; et x représente un nombre entier pouvant être égal à 0,1, 2 ou 3, avec la condition que lorsque x est égal à 3 alors au moins l'un desdits radicaux R est un radical silylé de formule $SiR_yY_{3-y}$ dans laquelle y est un entier égal à 0,1 ou 2, et R et Y ont la signification donnée ci-avant.

De manière encore plus préférentielle, les composés siliciés de formule (A) ci-dessus présentent au moins l'une des caractéristiques suivantes :

a) Les radicaux R sont des radicaux hydrocarbonés choisis, identiques ou différents, parmi les radicaux alkyles, cycloalkyles, aryles, alkylaryles, arylalyles, alcényles et alcynyles. De préférence, R est choisi parmi les radicaux alkyles.

Parmi les radicaux alkyles convenant pour la présente invention, on peut citer à titre d'exemples les radicaux méthyle, éthyle, propyle, butyle, pentyle, hexyle, heptyle et octyle. Parmi les radicaux cycloalkyles, on peut citer les radicaux cyclopentyle, cyclohexyle et cycloheptyle. A titre de radicaux aryles : les radicaux phényle et naphtyle ; de radicaux alkylaryles : les radicaux tolyle et xylyle ; et enfin de radicaux

arylalkyles : les radicaux benzyle, phénylethyle.
A titre de radicaux alcenyles, on peut citer plus particulièrement les radicaux vinyle, allyle, butenyle et pentenyle.
Enfin, on peut citer comme radicaux alcynyles, les radicaux éthynyle, propynyle et butynye.

b) Les radicaux Y sont choisis, identiques ou différents, parmi des radicaux de formule

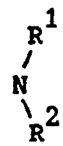 ,

dans laquelle les radicaux $R^1$ et $R^2$, identiques ou différents, sont choisis parmi l'atome d'hydrogène et les radicaux hydrocarbonés, éventuellement substitués.
Les radicaux hydrocarbonés les plus usités sont les radicaux alkyles, cycloalkyles, aryles, alkylaryles et arylalkyles, ainsi que les radicaux alcenyles et alcynyles.
Parmi les radicaux alkyles convenant pour la présente invention, on peut citer à titre d'exemples les radicaux méthyle, éthyle, propyle, butyle, pentyle, hexyle, heptyle et octyle. Parmi les radicaux cycloalkyles, on peut citer les radicaux cyclopentyle, cyclohexyle et cycloheptyle. A titre de radicaux aryles : les radicaux phényle et naphtyle ; de radicaux alkylaryles : les radicaux totyle et xylyle ; et enfin de radicaux arylalkyles : les radicaux benzyle, phénylethyle.
A titre de radicaux alcenyles, on peut citer plus particulièrement les radicaux vinyle, allyle, butenyle et pentenyle.
Enfin, on peut citer comme radicaux alcynyles, les raddicaux éthynyle, propynyle et butynyle.
De préférence, les radicaux $R^1$ et $R^2$ sont choisis, identiques ou différents, parmi l'hydrogène et des radicaux alkyles et cycloalkyles tels que notamment définis ci-avant. Ainsi, des exemples de radicaux Y plus particulièrement visés par la présente invention sont :
$N(CH_3)_2$
$NH(CH_3)$
$NH(C_6H_{11})$
$N(CH_2CH_3)_2$
$NH(CH_2CH_3)$
et $NH(CH_2CH_2CH_3)$
De préférence enfin, tous les radicaux Y sont choisis identiques.
Il faut noter ici que les radicaux $R^1$ et $R^2$ peuvent éventuellement être tels qu'ils forment ensemble une chaine hydrocarbonée cyclique, refermée sur l'atome d'azote. Ainsi, à titre d'exemple de radicaux Y du type hétérocycle azoté, on peut citer plus particulièrement les radicaux aziridinyle, pyrrolyle, pyrrolidinyle, pyrrolynyle, pypéridyle, pipérazinyle, indolyle, iso-indolyle, indolinyle, iso-indolinyle et carbozolyle.

d) x est entier égal à 0,1 ou 2, de préférence égal à 0 ou 1, et encore plus préférentiellement égal à 1.

Par quantité efficace d'un composé silicié tel que notamment défini ci-dessus, on entend une quantité suffisante pour réticuler convenablement le polysilazane et lui assurer ainsi un caractère substantiellement infusible et insoluble dans la plupart des solvants organiques usuels (pentane, hexane, toluène, benzène...).

Dans la pratique, des concentrations en composé silicié comprises entre 0,1 % et 30 % en poids par rapport à la masse du polysilazane peuvent être utilisées. De préférence, ces concentrations sont comprises entre 0,5 % et 10 % en poids.

L'adjonction du composé silicié au polysilazane de départ peut se faire selon tout moyen connu en soi.

Selon une première variante, convenant plus particulièrement pour la préparation ultérieure de fibres ou de couches minces réticulées, le polysilazane de départ est tout d'abord mis à la forme d'article désirée puis mis en contact avec le composé silicié destiné à l'imprégner ; le composé silicié peut alors se présenter sous la forme d'un liquide ou d'un gaz, mais de préférence sous la forme d'un gaz.

Selon une seconde variante, préférée, cette adjonction se fait par mélange direct, en masse ou en milieu solvant organique, des deux composés. Dans ce dernier cas, les compositions selon l'invention ainsi obtenues peuvent ensuite être mises en forme, et ceci selon les configurations les plus diverses telles que filaments, fibres, pellicules, revêtements de support, articles moulés ou autres, puis réticulées. Comme déjà indiqué, les compositions selon l'invention se prêtent alors avantageusement à la mise sous forme de fibres pour l'obtention, après réticulation et pyrolyse, de fibres céramiques.

Les compositions polysilazanes selon l'invention peuvent en outre servir de matrice pour des fibres

céramiques réalisées notamment en SiC, $SiO_2$, $Si_3N_4$, $B_4C$ etc... .Plus simplement encore, elles peuvent être aussi utilisées à la préparation de poudres céramiques.

Les compositions polysilazanes selon l'invention peuvent contenir en outre des charges de préférence choisies parmi $SiO_2$, $Si_3N_4$, SiC, BN, $B_2O_3$, $B_4$ C, AlN, $Al_2O_3$, $Al_4C_3$, TiN, $TiO_2$, TiC, $ZrO_2$, ZrC, $VO_2$ etc...

Dans l'application revêtements, pellicules, couches minces, la composition est de préférence utilisée sans solvant. Dans ce cas, les polysilazanes sont choisis de telle sorte que la viscosité de la composition à 25 °C soit comprise entre 1 et 5000 mPa.s.

Des viscosités supérieures peuvent être utilisées, mais il est alors nécessaire quand on veut utiliser les compositions pour enduire ou imprégner un support, de solubiliser la composition dans un solvant organique compatible avec les polysilazanes comme par exemple le benzène, le toluène, l'hexane, le cyclohexane, l'éther isopropylique, l'éther éthylique, le dichlorométhane et le chlorobenzène.

Dans l'application fibres, on utilise de préférence des viscosités supérieures à 5000 mPa.S. On peut alors opérer sans solvant à l'état fondu ou en solution, la réticulation s'effectuant à la sortie de la filière selon des modalités pratiques définies plus en détails ci-après.

Conformément à l'invention, et après donc mise en forme éventuelle, les compositions polysilazanes sont alors réticulées par mise en contact avec un composé aminé présentant au moins un groupement >NH et susceptible de transaminer le composé silicié défini ci-avant.

Selon un mode préférentiel de mise en oeuvre du procédé de réticulation selon l'invention, on utilise, à titre de composé aminé, au moins un composé de formule (B) suivante :

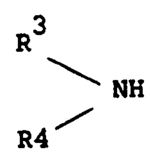

dans laquelle les radicaux $R^3$ et $R^4$, identiques ou différents, sont choisis parmi l'atome d'hydrogène et les radicaux hydrocarbonés, éventuellement substitués. A titre de radicaux hydrocarbonés on peut citer les radicaux alkyles, cycloalkyles, aryles, alkylaryles, arylalkyles, alcényles et alcynyles.

De préférence, les radicaux $R^3$ et $R^4$ sont choisis parmi l'hydrogène et les radicaux alkyles ou cycloalkyles, comme par exemple les radicaux méthyle, éthyle, propyle, butyle, pentyle, hexyle, heptyle, octyle, cyclopentyle, cyclohexyle et cycloheptyle.

Encore plus préférentiellement, on utilise, à titre de composé aminé, l'ammoniac ($R^3 = R^4 = H$).

Le composé aminé peut se présenter sous la forme d'un liquide ou d'un gaz. De préférence, on opère avec des gaz, et plus particulièrement lorsqu'il s'agit de réticuler des fibres ou des couches minces. Le composé aminé peut être utilisé pur, ou bien encore dilué dans un gaz inerte, tel qu'un gaz d'argon (ou tout autre gaz rare) ou d'azote par exemple.

On opère généralement à pression atmosphérique, bien que des pressions inférieures ou supérieures ne soient bien évidemment pas exclues.

Par ailleurs, la mise en contact entre la composition polysilazane et le composé aminé peut être statique ou dynamique, c'est à dire réalisée sous balayage.

La température à laquelle est menée le traitement, et la durée de ce dernier, peuvent varier dans une large mesure et dépendent de la nature de la composition polysilazane à durcir. D'une manière générale, la durée est liée à la température du traitement : plus cette température est élevée et plus la durée du traitement peut être raccourcie, l'important étant d'aboutir dans tous les cas en fin de traitement à un état substantiellement infusible.

D'une manière pratique, cette température est généralement comprise entre l'ambiante et la température de ramollissement de la composition polysilazane ; elle est de préférence comprise entre 30 °C et une température légèrement inférieure à celle correspondant au point de ramollissement de la composition polysilazane à durcir.

La durée du traitement n'étant pas critique, elle peut varier de quelques minutes à plusieurs heures, selon les températures mises en jeu.

A l'issue de ce traitement, on récupère un polysilazane infusible et insoluble dans la plupart des solvants organiques usuels, notamment dans l'hexane.

Les compositions ainsi durcies peuvent alors subir, de manière classique et connue, des traitements thermiques (pyrolyses) destinés à les transformer en des céramiques à base de SiC, $Si_3N_4$ ou leurs mélanges.

Plus particulièrement, les supports recouverts ou imprégnés de la composition durcie, ou les fibres

durcies, peuvent subir immédiatement ou ultérieurement une pyrolyse menée sous vide ou sous pression ou sous atmosphère inerte ou réactive (par exemple $NH_3$) jusqu'à l'obtention d'une céramisation totale.

La composition selon l'invention et le procédé de réticulation de cette composition permettent donc de faire des demi-produits intermédiaires pouvant être conservés à l'air ambiant et qui peuvent être ultérieurement pyrolysés.

Ceci constitue donc un procédé particulièrement avantageux pour déposer ou imprégner sur un support une matière céramique, et pour obtenir des fibres de céramiques.

Des exemples concrets, mais non limitatifs, illustrant l'invention dans ses divers aspects, vont maintenant être donnés.

EXEMPLE 1

Un polysilazane de départ est tout d'abord préparé de la manière suivante :
dans un réacteur de trois litres double enveloppe muni d'une agitation mécanique, d'un tube d'entrée des gaz et d'un condenseur, on effectue une coammonolyse, en présence de 1,1 litre d'éther isopropylique, d'un mélange de $CH_3SiCl_3$ (0,85 mole) et de $(CH_3)_2SiCl_2$ (0,59 mole). Ce mélange dans l'éther isopropylique est refroidi à 3° C et est maintenu à cette température pendant l'introduction de $NH_3$ gazeux. Le débit d'introduction de $NH_3$ est d'environ 6 ml/s et l'addition a lieu en 6 heures. En fin d'essai, on filtre le chlorure d'ammonium formé sur verre fritté (diamètre moyen des pores : 10 µm) et on récupère une solution limpide de polysilazane. Cette solution est ensuite concentrée puis traitée par de l'acide triflique selon des modalités pratiques définies dans la demande de brevet français 2 577 933.On ajoute ensuite à cette solution 10 % en poids, par rapport au polymère polysilazane, d'un silane de formule $CH_3Si\ (N(CH_3)_2)_3$.

Le mélange obtenu est alors séché (élimination du solvant) pendant 2 heures à 150° C et sous 5 mm de mercure. Le dosage RMN donne une teneur en silane, dans le produit séché, égale à 4 % en poids.

Les caractéristiques de la composition ainsi obtenue sont les suivantes :
Tf : 170° C (température de fusion)
Tr : 150° C (température de ramolissement)
teneur en $O_2$ : 2,5 % en poids.

Cette composition est alors traitée en poudre pendant 20 heures, à 130° C, sous atmosphère d'ammoniac. Après traitement, on récupère un produit infusible, insoluble notamment dans l'hexane, et dont les caractéristiques sont les suivantes :
Tf > 260° C
teneur en $O_2$ : 5,4 % en poids.

Exemple 2

Une solution de polysilazane de départ est préparée comme dans l'exemple 1 (traitement à l'acide triflique compris) mais en partant de 0,36 mole de $(CH_3)_2\ SiCl_2$ et de 1,6 mole de $CH_3SiCl_3$.

On ajoute à cette solution 8 % en poids, par rapport au polysilazane, d'un silane de formule $CH_3Si(NHC_6H_{11})_3$.

Après séchage du mélange dans des conditions identiques à celles de l'exemple 1, on récupère une composition présentant les caractéristiques suivantes :
Tf : 125° C
Tr : 70° C

Cette composition est alors traitée en poudre pendant 4h50 sous atmosphère d'ammoniac et à une température allant progressivement de 70 à 110° C.

Après traitement, on récupère un produit infusible (Tf > 260° C) et insoluble, notamment dans l'hexane, et dont la teneur en poids en oxygène est inférieure à 1 %.

Exemple 3

A la solution de polysilazane préparée selon l'exemple 2, on rajoute cette fois 2 % en poids, par rapport au polysilazane, d'un silane de formule $CH_3\ Si(NH\ C_6H_{11})_3$, puis on sèche le mélange dans des conditions identiques à celles de l'exemple 1. La composition ainsi obtenue est alors traitée en poudre pendant 4h50 sous ammoniac et à une température allant progressivement de 70° C à 150° C.

A l'issue du traitement, on récupère un produit infusible (température de fusion supérieure à 260 ° C) et insoluble, notamment dans l'hexane.

Exemple 4

La composition polysilazane préparée selon l'exemple 2 (Tf : 125 ° C ; Tr : 70 ° C) est filée par extrusion sous forme de fibres (diamètre : 13 $\mu$) puis traitée sous forme de bourre dans une atmosphère d'ammoniac en vue d'être réticulée.

Après un traitement d'1h30 à 70 ° C, on récupère des fibres légèrement collées, infusibles et insolubles, présentant une température de fusion supérieure à 260 ° C et une température de ramollissement égale à 110 ° C.

Après un traitement de 14 h à 30 ° C suivi d'un second traitement de 2h30 à 50 ° C, on récupère des fibres non collées, infusibles et insolubles, ayant une température de fusion supérieure à 260 ° C.

**Revendications**

1/ Composition polysilazane réticulable, caractérisée par le fait qu'elle comporte une quantité efficace d'au moins un composé silicié, substantiellement inerte vis à vis dudit polysilazane, et susceptible d'être transaminé par un composé aminé comprenant au moins un groupement $>$NH.

2/ Composition selon la revendication 1, caractérisée en ce que ledit polysilazane comporte par molécule au moins un groupement $\equiv$ Si-NH-.

3/ Composition selon l'une quelconque des revendications 1 à 2, caractérisée en ce que ledit composé silicié répond à la formule (A) suivante :

$R_x$ Si $Y_{4-x}$ (A)

formule dans laquelle les radicaux R sont choisis, identiques ou différents, parmi l'atome d'hydrogène, les radicaux hydrocarbonés, éventuellement substitués, et les radicaux silylés ; les radicaux Y représentent des radicaux, identiques ou différents, susceptibles d'être transaminés ; et x représente un nombre entier pouvant être égal à 0,1, 2 ou 3, avec la condition que lorsque x est égal à 3 alors au moins l'un desdits radicaux R est un radical silylé de formule $SiR_yY_{3-y}$ dans laquelle y est un entier égal à 0,1 ou 2, et R et Y ont la signification donnée ci-avant.

4/ Composition selon la revendication 3 caractérisée en ce que les radicaux R sont des radicaux hydrocarbonés choisis, identiques ou différents, parmi les radicaux alkyles, cycloalkyles, aryles, alkylaryles, arylalyles, alcényles et alcynyles.

5/ Composition selon la revendication 4 caractérisée en ce que les radicaux R sont des radicaux alkyles.

6/ Composition selon l'une quelconque des revendications 3 à 5, caractérisée en ce que les radicaux Y sont choisis, identiques ou différents, parmi des radicaux hétérocycliques azotés et des radicaux de formule

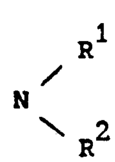

dans laquelle les radicaux $R^1$ et $R^2$, identiques ou différents, sont choisis parmi l'atome d'hydrogène et les radicaux hydrocarbonés, éventuellement substitués.

7/ Composition selon la revendication 6, caractérisée en ce que tous les radicaux Y sont identiques.

8/ Composition selon l'une des revendications 6 et 7, caractérisée en ce que les radicaux $R^1$ et $R^2$ sont choisis parmi l'atome d'hydrogène, les radicaux alkyles et les radicaux cycloalkyles.

9/ Composition selon l'une quelconque des revendications 3 à 8, caractérisée en ce que x est égal à 0, 1 ou 2.

10/Composition selon la revendication 9 caractérisée en ce que x est égal à 0 ou 1.

11/Composition selon l'une quelconque des revendications précédentes caractérisée en ce que ledit composé silicié est présent à raison de 0,1 et 30 % en poids par rapport à la masse du polysilazane.

12/Composition selon la revendication 11 caractérisée en ce que ladite teneur est comprise entre 0,5 et

10 % en poids.

13/Composition selon l'une quelconque des revendications précédentes caractérisée en ce qu'elle comporte en outre des charges.

14/Composition selon l'une quelconque des revendications précédentes caractérisée en ce qu'elle contient en outre un solvant organique compatible avec ledit polysilazane.

15/Procédé de réticulation d'une composition polysilazane telle que définie à l'une quelconque des revendications 1 à 14, caractérisé par le fait qu'il consiste à mettre en contact ladite composition polysilazane avec un composé aminé comprenant au moins un groupement $\geq$NH.

16/Procédé selon la revendication 15 caractérisé en ce que ledit composé aminé répond à la formule (B) suivante :

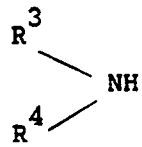

dans laquelle les radicaux $R^3$ et $R^4$, identiques ou différents, sont choisis parmi l'atome d'hydrogène et les radicaux hydrocarbonés, éventuellement substitués.

17/Procédé selon la revendication 16 caractérisé en ce que les radicaux $R^3$ et $R^4$ hydrocarbonés sont choisis parmi les radicaux alkyles, cycloalkyles, aryles, alkylaryles, arylalkyles, alcényles et alcynyles.

18/Procédé selon la revendication 16 caractérisé en ce que les radicaux $R^3$ et $R^4$ sont choisis, identiques ou différents, parmi l'atome d'hydrogène et les radicaux alkyles et cycloalkyles.

19/Procédé selon la revendication 18 caractérisé en ce que l'on utilise l'ammoniac.

20/Procédé selon l'une quelconque des revendications 15 à 19 caractérisé en ce que ladite mise en contact se fait à une température comprise entre la température ambiante et la température de ramollissement de la composition polysilazane.

21/Procédé selon la revendication 20 caractérisé en ce que ladite température est comprise entre 30 °C et une température légèrement inférieure à la température de ramollissement de la composition polysilazane.

22/Procédé de réticulation selon l'une quelconque des revendications 15 à 21, caractérisé par le fait que ladite composition polysilazane a été préalablement obtenue par mélange direct, en masse ou en milieu solvant organique, du polysilazane et du composé silicié.

23/Procédé de réticulation selon l'une quelconque des revendications 15 à 21, caractérisé par le fait que ladite composition polysilazane a été préalablement obtenue par imprégnation du polysilazane par le composé silicié.

24/Procédé de réticulation selon l'une quelconque des revendications 15 à 23, caractérisé en ce que, avant ladite mise en contact avec ledit composé aminé, l'on met ladite composition polysilazane à une forme d'article désirée, telle que fibre ou couche mince.

25/Procédé de préparation d'un produit céramique à base de SiC et/ou $Si_3N_4$ caractérisé par le fait qu'il consiste à pyrolyser une composition polysilazane réticulée selon un procédé conforme à l'une quelconque des revendications 15 à 24.

Office européen des brevets

# RAPPORT DE RECHERCHE EUROPEENNE

Numero de la demande

EP 89 40 3498

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 200 326 (DOW CORNING)<br>* Revendication 1; page 12, lignes 23-56; page 13, lignes 1-13 *<br>--- | 1 | C 08 G 77/62<br>C 08 J 3/24<br>C 04 B 35/00<br>C 04 B 35/58 |
| A | FR-A-2 583 744 (CHISSO)<br>* Revendications 1,4 *<br>--- | 1 | |
| A | FR-A-2 590 584 (RHONE-POULENC)<br>* Revendication 1 *<br>----- | 1 | |

**DOMAINES TECHNIQUES RECHERCHES (Int. Cl.5)**

C 08 G
C 08 L
C 08 J
C 04 B

Le présent rapport a été établi pour toutes les revendications

| Lieu de la recherche | Date d'achèvement de la recherche | Examinateur |
|---|---|---|
| LA HAYE | 10-05-1990 | DEPIJPER R.D.C. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)